# EUROPEAN PATENT SPECIFICATION

(11) **EP 2 090 095 B1**
(45) Date of publication and mention of the grant of the patent: **02.01.2013**
(21) Application number: 08753336.0
(22) Date of filing: 06.05.2008
(51) Int. Cl.: H04N 5/782, H04N 21/472, H04N 21/482, H04N 5/445

(54) **IMAGE DISPLAY APPARATUS AND METHOD FOR CONTROLLING THE SAME**
BILDANZEIGEVORRICHTUNG UND STEUERUNGSVERFAHREN DAFÜR
DISPOSITIF D'AFFICHAGE D'IMAGE ET SON PROCÉDÉ DE CONTRÔLE

(30) Priority: 22.05.2007 KR 20070049618
(43) Date of publication of application: 19.08.2009
(73) Proprietor: LG Electronics Inc., Seoul 150-721 (KR)
(72) Inventor: KO, Myoung-Hwa, Gumi-city Gyoungbuk-do 730-727 (KR)
(74) Representative: Cabinet Plasseraud
(86) International application number: PCT/KR2008/002539
(87) International publication number: WO 2008/143411

(56) References cited:
- WO-A1-03/026292
- WO-A2-2006/060157
- KR-A- 20050 065 545
- KR-A- 20060 062 075
- KR-A- 20060 113 212
- US-A- 5 479 266
- US-A1- 2002 100 049
- US-A1- 2002 174 430

## Description

### Technical Field

The present invention relates to a method for displaying information of a recording material related to a program on broadcasting schedule information and an image display apparatus for implementing the method.

### Background Art

Generally, a representative example of an image display apparatus includes a television (TV). The TV is an image display apparatus for selecting broadcasting signals transmitted through a channel selected by a user from broadcasting signals transmitted from a broadcasting station, demodulating the broadcasting signals, separating the broadcasting signals into voice signals and image signals, processing the voice signals and image signals, and outputting the voice signals through a speaker and displaying the image signal on the screen.

Generally, in the field of an image display apparatus, as TV technology develops, methods for transmitting broadcasting signals have developed, and accordingly, an interest in a digital TV that has applied digital transmission has increased.

The digital TV provides a function of allowing a user to store images in real-time using a personal video recorder (PVR) while viewing broadcasting and reproducing the stored images at a desired time, and this function can be used for recording a conference when a video conference is performed using a digital TV as well as for storing a favorite broadcasting program.

Generally, a PVR system is a personal digital video recording apparatus for recording/reproducing information on/from a hard disk drive (HDD). Unlike a video cassette recorder (VCR) for storing image signals on a magnetic tape, the PVR system is a digital recording apparatus of a new concept, for recording/reproducing information on/from an HDD. The PVR is a next generation recording apparatus that can record a broadcasting program of a predetermined time period depending on a capacity through an HDD mounted inside a set top box or a TV main body even without a VCR.

That is, the PVR system is a system that can convert digital broadcasting data (Europe: DVB, Korea/Japan/North America: ATSC), analog broadcasting data (Europe: PAL, Korea/Japan/North America: NTSC) received through a broadcasting channel into digital signals using a central processing unit (CPU) and a video signal processor, convert the digital signals into digital data and storing the same using a memory device inside the system to perform an analog-to-digital (A/D) conversion, and reproduce the stored digital data through a display device or a screen at a time or a thod desired by a user in a TV system.

US 5 479 266 A discloses a user interface for a television schedule system using color-coding fields to indicate recording status of certain programs in an electronic program guide.

### Disclosure of Invention

### Technical Problem

In a related art image display apparatus, however, a user cannot recognize whether or not a program on which the user has set a reservation recording is stored in the memory device for subsequent viewing. As a result, the user cannot view the corresponding program. Also, the user may unnecessarily record the same program (rebroadcast program) again even if the program is already stored in the memory device.

Also, in the case where the user sets a series reservation recording, all of the corresponding program series materials (including the rebroadcast program) are always recorded, so that already stored series materials may be doubly recorded unnecessarily.

### Technical Solution

The present invention is directed to providing an apparatus and method for managing materials to be reservation-recorded and controlling broadcast scheduling information, which address the limitations and disadvantages associated with the related art.

The apparatus is as defined in claim 1, while the method is defined in claim 8. Embodiments are further defined in claims 2-7 and 9.

In one embodiment, an image display apparatus includes: a signal receiver for receiving broadcasting signals including broadcasting schedule information from an outside, and processing the received broadcasting signals; a storage for storing the broadcasting schedule information and a broadcasting program processed by the signal receiver; a user interface for receiving a request command from a user: a controller for judging whether recording materials related to a program existing in the broadcasting schedule information exist in the storage when a broadcasting schedule information display command is input from the user interface, and outputting a control signal so that the broadcasting schedule information including information regarding the recording material is displayed; and a broadcasting schedule information generator for generating broadcasting schedule information including recording material information related to at least one program in response to a control signal from the controller.

According to an embodiment, recording material state information related to programs on broadcasting schedule information is displayed, so that whether a desired recording material exists is recognized, viewing and deletion of the recording material can be managed. Since broadcasting schedule information including recording material information is displayed, a user can easily manage a recording material to make efficient use of a storage medium. Information of series recording materials related to a series program on broadcasting schedule information is displayed, so that a user can easily set series reservation recording. Already stored series recording material is not recorded again but immediately viewed. Also, reservation recording of only series program that overlaps already stored series material can be easily set.

According to an embodiment, an image display apparatus comprises a signal receiver configured to receive broadcasting signals including broadcasting schedule information, and to process the received broadcasting signals; a storage configured to store the broadcasting schedule information and at least one broadcasting material processed by the signal receiver; and a controller configured to determine whether at least part of a particular broadcasting material identified in the broadcasting schedule information is stored in the storage when a broadcasting schedule information display command is received from a user, and to output a control signal based on this determination result, so as to display modified broadcasting schedule information including information regarding the particular broadcasting material.

According to an embodiment, a method for displaying broadcasting schedule information, comprises receiving broadcasting schedule information; determining if a particular broadcasting material identified in the received broadcasting schedule information is stored in a storage; and displaying modified broadcasting schedule information including information regarding the stored particular broadcasting material based on the determination result.

According to an embodiment, an image display apparatus comprises a signal receiver configured to receive broadcasting signals including broadcasting schedule information and to process the received broadcasting signals; a storage configured to store broadcasting schedule information and at least one broadcasting program processed by the signal receiver; and a controller configured to judge whether at least a part of at least one series program identified in the broadcasting schedule information is stored in the storage when a broadcasting schedule information display command is received from a user, and to output a control signal so that modified broadcasting schedule information including recording existence indicating information for indicating a storage status of the at least one series program is displayed.

According to an embodiment, a method for controlling an image display apparatus, comprises receiving broadcasting schedule information; determining if at least a part of at least one series program identified in the broadcasting schedule information is stored in a storage; and displaying modified broadcasting schedule information including recording existence indicating information regarding a storage status of the at least one series program based on the determination result.

According to an embodiment, a method for controlling an image display apparatus, comprises receiving a command for recording a series program, wherein the series program includes a plurality of episodes; determining if at least one episode of the series program is recorded in a storage unit; and displaying broadcasting schedule information including a list of the plurality of episodes if the determining step determines that all episodes of the series program are recorded, or displaying broadcasting schedule information including a menu for selecting at least one episode of the series program that is not recorded if the determining step determines that at least one episode of the series program is not recorded.

It is to be understood that both the foregoing general description and the following detailed description of the present invention are exemplary and explanatory and are intended to provide further explanation of the invention as claimed.

### Advantageous Effects

According to the embodiments, a user can check recording material information in broadcasting schedule information at one glance to easily view and delete the recording materials in an efficient manner. This results in a user-friendly system for reservation-recording broadcast contents and managing the reservation-recorded broadcast contents.

### Brief Description of the Drawings

Fig. 1 is a block diagram of the construction of an image display apparatus according to an embodiment of the invention.

Fig. 2 is a view illustrating an example of broadcasting schedule information displayed on a screen according to a first embodiment of the invention.

Fig. 3 is a flowchart for explaining a method for controlling an image display apparatus according to the first embodiment of the invention.

Fig. 4 is a view illustrating an example of broadcasting schedule information displayed on a screen according to a second embodiment of the invention.

Fig. 5 is a flowchart for explaining a method for controlling an image display apparatus according to the second embodiment of the invention.

Figs. 6 to 7 are views illustrating an example of broadcasting schedule information displayed on a screen according to a third embodiment of the invention.

Fig. 8 is a flowchart for explaining a method for controlling an image display apparatus according to the third embodiment of the invention.

### Mode for the Invention

Reference will now be made in detail to the embodiments of the present disclosure, examples of which are illustrated in the accompanying drawings. In the present disclosure, a recording material refers to any content or material (e.g., broadcasting material/content) which a user requests to be recurded/stored using an image display apparatus such as a PVR, and can include, but is not limited to, a program, advertisement, clip, audio, etc.

Embodiment

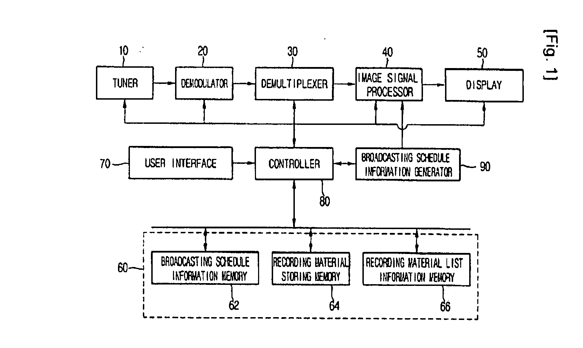

Referring to Fig. 1, an image display apparatus according to an embodiment includes a tuner 10, a demodulator 20, a demultiplexer 30, an image signal processor 40, a display 50, a storage 60, a user interface 70, a controller 80, and a broadcasting schedule information generator 90. The image display apparatus can include other components, and all components of the image display apparatus are operatively coupled and configured. The image display apparatus can be a PVR.

The tuner 10 selects broadcasting signals of a channel desired by a user from broadcasting signals received from an outside, where the broadcast signal include broadcasting schedule information (e.g., electronic program guide (EPG)). The demodulator 20 demodulates the broadcasting signals selected by the tuner 10 to correct errors, and converts the broadcasting signals into transport streams (TSs). The demultiplexer 30 demultiplexes TSs input through the demodulator 20 and multiplexed in time to separate the TSs into voice streams, image streams, and additional information streams. The image signal processor 40 processes the image streams separated by the demultiplexer 30 so that the image streams can be displayed. The display 50 displays image signals processed by the image signal processor 40.

The storage 60 stores broadcasting schedule information and broadcasting programs/materials. The user interface 70 receives request commands from a user, e.g., via a remote controller or other input unit.

When a broadcasting schedule information display command is input from the user interface 70, the controller 80 judges whether a recording material (e.g., program) identified in the broadcasting schedule information is already stored/recorded in the storage 60, and outputs a control signal based on the judgment result so that broadcasting schedule information including recording material state information related to at least one program/material is displayed. For example, the broadcasting schedule information generator 90 generates broadcasting schedule information including recording existence indicating information of the recording material in response to the control signal from the controller 80.

Also, the storage 60 includes a broadcasting schedule information memory 62 for storing broadcasting schedule information such as a program title, a program description, a broadcast time, etc.; a recording material storing memory 64 for storing a broadcasting program/material received from the outside, and a recording material list information memory 66 for storing list information of recording materials stored in the recording material storing memory 64.

The operation of the image display apparatus according to a first embodiment will be descried below.

First, when a power-on command is input through the user interface 70, the controller 80 outputs a signal so that broadcasting signals of a channel desired by a user are selected by the tuner 10.

The tuner 10 selects broadcasting signals of a channel desired by the user from broadcasting signals received from the outside, and the demodulator 20 demodulates the broadcasting signals selected by the tuner 10 to correct errors, and converts the broadcasting signals into TSs. The TSs output from the demodulator 20 and multiplexed in time are demultiplexed by the demultiplexer 30 and separated into audio streams, video/image streams, and additional information streams.

The image stream separated by the demultiplexer 30 is converted into a brightness signal and a color signal by the image signal processor 40, which are then displayed through the display 50. The image stream, audio/voice stream, and additional information stream separated by the demultiplexer 30 according to a recording command input through the user interface 70 pass through predetermined signal processings and are stored in the storage 60.

Here, the additional information stream preferably means additional information (e.g.. a program title, a broadcasting time, a channel, and a genre, etc.) regarding a program/material to be broadcast in the future by a predetermined period. The additional information is stored in the broadcasting schedule information memory 62 in response to a control signal of the controller 80. The image and voice streams are stored in the recording material storing memory 64. List information of programs/material stored in the recording material storing memory 64 is stored in the recording material list information memory 66, and can identify a list of materials that are stored/recorded in the memory 64. Then a user can view this list to know what materials are already recorded so duplicate recording of broadcast programs can be avoided in an efficient manner. Also, when a broadcasting schedule information display command is input from the user interface 70, the controller 80 extracts a corresponding broadcasting schedule information from the broadcasting schedule information memory 62, and judges whether a recording material related to a program identified in the broadcasting schedule information is already stored in the recording material list information memory 66.

For example, information regarding programs to be broadcast in the future and programs broadcasted previously can be part of the broadcasting schedule information. A program title contained in the broadcasting schedule information is compared with a recording list stored in the recording material information memory 66 to judge whether a recording material related to the program is stored in the recording material storing memory 64.

Here, the recording material related to the program preferably means the program itself, or any part of the program (e.g., at least one episode) in case of a series program.

That is, the controller 80 outputs a control signal so that when a general program contained in the broadcasting schedule information is rebroadcasting and a corresponding recording material exists in the memory 64 (i.e., the broadcast program is already stored in the memory 64 per user's request), recording existence indicating information of the stored recording material is displayed on the display 50. When the general program contained in the broadcasting schedule information is a series program and the series program is already stored in the memory 64, broadcasting schedule information modified to include the recording existence indicating information of the series program is displayed on the display 50.

The broadcasting schedule information generator 90 generates the modified broadcasting schedule information including the recording existence indicating information of a recording material/program on the basis of information regarding whether the recording material is stored in the memory 64 in response to a control signal of the controller 80.

The image signal processor 40 mixes an image stream separated by the demultiplexer 30 and the broadcasting schedule information generated by the broadcasting schedule information generator 90 to perform signal processing so that the image signal (image stream) can be displayed. The display 50 receives the signal-processed image signal and displays the same.

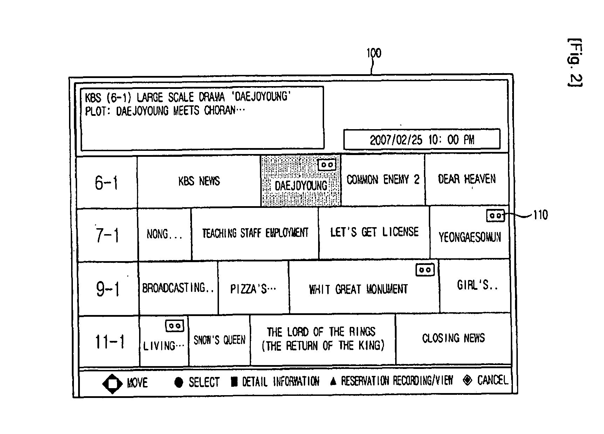

Fig. 2 shows an example of broadcasting schedule information 100 displayable on the display 50. Referring to Fig. 2, the broadcasting schedule information 100 is displayed on the screen of the display 50. The broadcasting schedule information 100 (e.g., EPG) includes names of the programs which are to be broadcast or already broadcasted and other information, and recording existence indicating information 110. The recording existence indicating information 110 indicates whether or not a corresponding broadcasting program is stored in the memory 64. In this example, a symbol 110 is used and if this symbol is displayed in a box identifying a particular program, then this means that program is already recorded/stored in the memory 64. For instance, a program called "Dae Joyoung" has this symbol displayed next to it, which means this program is already stored in the memory 64. For example, the program "Dae Joyoung" may be rebroadcasting for the second time and that the user already reserve-recorded this program in the memory 64 when it was broadcast for the first time previously. If the program having the symbol 110 is a series program, then the symbol 110 can mean that at least one episode/series of this program is recorded in the memory 64. Therefore, the user can check whether a recording material regarding a program to be broadcast in the future exists using the broadcasting schedule information 100 including the recording existence indicating information 110, and a recognition degree regarding whether or not a particular recording material stored in the recording material storing memory 64 is increased for the user, so that double recording of the same program is avoided. Also, regarding a series material program (e.g., program having multiple episodes or series), a storage state of each of the corresponding episodes/series can be known collectively or individually, so that reserve-recording of the series recording materials can be effectively managed according to the present invention.

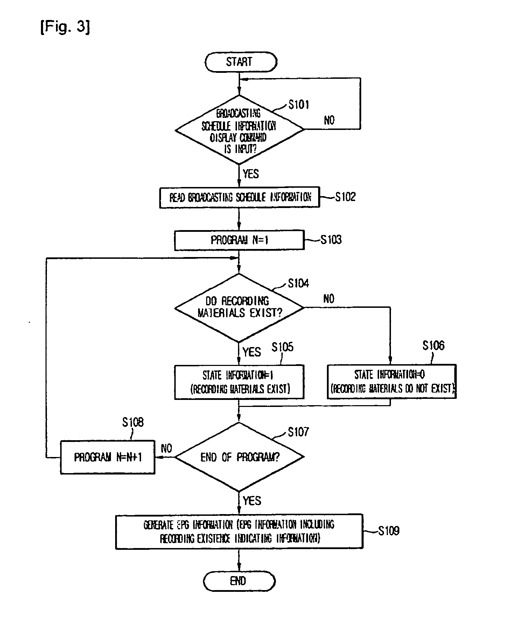

A method for controlling the image display apparatus according to a first embodiment is discussed now referring to Fig. 3. The method of Fig. 3 and other methods of the invention are implementable in the apparatus of Fig. 1 or other suitable device.

Referring to Fig. 3, whether a broadcasting schedule information display command is input (e.g., from a user via the user interface 70) is judged (S101).

Subsequently, when the broadcasting schedule information display command is input as a result of the judgment (S101), broadcasting schedule information already stored in the broadcasting schedule information memory 62 is read (S 102).

Regarding a first program identified in the broadcast schedule information, whether the first program (recording material) exists in the recording material storing memory 64 is judged (S103-S104). For example, a title (or some other identification) of the first program is compared with a recording list already stored in the recording material information memory 66 to judge whether the first program is included in the stored recording list. If the title of the first program is included in the stored recording list as being recorded, then the first program is determined to be stored in the memory 64. Other parameters such as program ID may be used to determine if a particular program is listed in the stored recording list. Here, the recording material can be the entire program or part of the program, where the program can have multiple episodes or series. Subsequently, when the particular recording material (program) is determined to exist in the memory 64 as a result of the judgment (S104), recording existence indicating information("State Information") of that program is set to 1 (S105). In this example, setting the recording existence indicating information ("State Information") to 1 means that the corresponding program exists (is stored) in the recording material storing memory 64, and to 0 means that the corresponding program does not exist in the recording material storing memory 64.

When it is determined that the corresponding recording material (program) does not exist in the memory 64 as a result of the judgment (S 104), the recording existence indicating information of the program is set to 0 (S 106).

Then whether the program is a last program identified in the broadcasting schedule information is judged (S107).

Subsequently, if the program is not the last program, then a next program identified in the broadcasting schedule information is judged according to step S 104 (S 108). That is, when the current program is an n-th program at step S107, step S 104 is performed on an (n+1)-th program to check whether the (n+1)-th program is stored in the memory 64. Through steps S104 S108, all the programs identified in the broadcasting schedule information are checked to determine if they are stored in the memory 64.

Also, when it is determined that the current program is the last program identified in the broadcasting schedule information as a result of the judgment (S107), broadcasting schedule information (e.g., EPG information) having recording existence indicating information (e.g., symbol 110 in Fig. 2) through which the user can know whether a corresponding recording material is stored in the memory 64, is generated on the basis of the recording existence indicating information (S109). The EPG information including the recording existence indicating information can be displayed on the display 50.

Embodiment 11

Description of an image display apparatus according to another embodiment is made for parts different from those of the previous embodiment, and the description of the same parts is omitted or briefly discussed.

The image display apparatus according to this embodiment includes a tuner 10, a demodulator 20, a demultiplexer 30, an image signal processor 40, a display 50, a storage 60, a user interface 70, a controller 80, and a broadcasting schedule information generator 90. These components are discussed also above in connection with Fig. 1.

When a broadcasting schedule information display command is input from the user interface 70, the controller 80 checks whether a series recording material (e.g., a series program or program with multiple episodes) identified in the broadcasting schedule information exists (is stored) in the recording material storing memory 64, and outputs a control signal accordingly so that the broadcasting schedule information including recording existence indicating information of the series recording material is displayed on the display 50. The broadcasting schedule information generator 90 generates the broadcasting schedule information including the recording existence indicating information of the series recording material in response to a control signal of the controller 80.

The operation of the image display apparatus according to another embodiment will be descried below.

First, when a broadcasting schedule information display command is input from the user interface 70, the controller 80 reads broadcasting schedule information stored in the broadcasting schedule information memory 62, and judges whether a series recording material exists with respect to only series programs identified in the broadcasting schedule information.

For example, the controller 80 reads the broadcasting schedule information, judges whether a particular program is a series program using additional information regarding programs identified in the broadcasting schedule information, and then judges whether the series program exists in the memory 64.

Also, the controller 80 sets recording existence indicating information of a series recording material (e.g., series program) to, e.g., 1, which indicates that this series recording material is not already stored in the memory 64 and that the user can request this series recording material to be recorder in the image display apparatus if desired. Also, if a particular series recording material exists in the memory 64, the controller 80 judges whether the corresponding series recording material exists in its entirety or partially.

For example, the controller 80 judges whether all series (or episodes) of the series program exist in the memory 64, some of the series of the series program exist in the memory 64, or none of the series of the series program exist in the memory 64. Whether the series recording material exists in its entirety or partially can be checked, e.g., using the recording material list information already stored in the recording material list information memory 66.

Also, if the series recording material exists in its entirety (i.e., all series/episodes are stored in the memory 64), the controller 80 sets the recording existence indicating information of the series program to, e.g., 2.

When the series recording material exists partially (i.e., only some of the series/episodes are stored in the memory 64), the controller 80 sets the recording existence indicating information of the series program to, e.g., 3.

Other values may be used for the recording existence indicating information.

Also, the controller 80 judges whether a reservation recording has been already set with respect to the series program. For example, the controller 80 compares the series program with reservation recording list information (e.g., stored in the image display apparatus) to judge whether the reservation recording is set for the series program.

Therefore, if a reservation recording has been already set (requested by the user) for the particular series program, the controller 80 sets reservation recording set state information of the series program to, e.g., A or some other value. If, however, a reservation recording is not set for the particular series program, the controller 80 sets the reservation recording set state information of the series program to, e.g., B or some other value, so that such information can be used to indicate to the user whether or not a reservation recording for a particular program has been requested/set by the user.

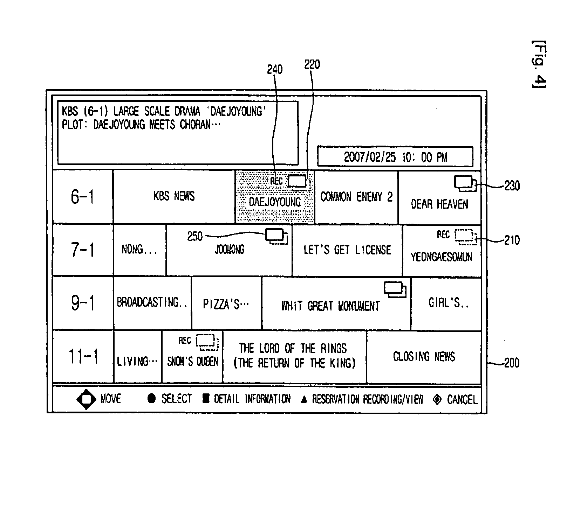

Also, the controller 80 delivers recording existence indicating information (e.g., state information 210, 220, 230 in Fig. 4) and reservation recording set state information (e.g., information 240 in Fig. 4) regarding the above-checked respective series programs to the broadcasting schedule information generator 90, and outputs a control signal based on the delivered information so that broadcasting schedule information including such information is generated for display. An example of such broadcasting schedule information 200 is shown in Fig. 4, which will be discussed later in more detail. The broadcasting schedule information generator 90 generates the broadcasting schedule information 200 including information indicating whether there exists in the storage a series recording material/program identified in the broadcasting schedule information, and a reservation recording set indicator (reservation recording set state information) in response to a control signal of the controller 80.

Referring to Fig. 4, the broadcasting schedule information 200 generated by the broadcasting schedule information generator 90 includes state information regarding respective series programs. For example, state information 210, 220 and 230 (e.g., with two rectangles overlapping each other) indicate that programs "Yengaesomun", "Dae Joyoung" and "Dear Heaven" are series programs. Further, the state information 210 for "Yeongaesomum" indicates that none of the series in "Yeongaesomum" are stored in the memory 64, e.g., by having the two rectangles in dotted lines. The state information 220 for "Dae Joyoung" further indicates that some of the series in "Dae Joyoung" are stored in the memory 64, e.g., by having one rectangle in dotted lines and the other in solid lines. The state information 230 for "Dear Heaven" further indicates that all of the series in "Dear Heaven" are stored in the memory 64, e.g., by having two rectangles in solid lines. That is, in case of the program "Dae Joyoung", the state information 220 indicating that the program is a series material and that this program is partially (e.g., some series) stored in the storage 60 is displayed in the broadcasting schedule information 200. In case of the program "Dear Heaven", the state information 230 indicating that the program is a series material and that this program is stored in their entirety in the storage 60 is displayed in the broadcasting schedule information 200. In case of the program "Yeongaesomun", the state information 210 indicating that the program is a series material and that this program is not stored at all in the storage 60 is displayed in the broadcasting schedule information 200.

Also, state information 240 representing whether a reservation recording has been set for the program can be displayed on the series programs. For example, "REC"(state information 240) is displayed next to the series program "Dae Joyoung" to indicate that a reservation recording has been set for this program. Thus those episodes of the program "Dae Joyoung" that are not already stored in the memory 64 will be stored in the memory 64. That is, wherever "REC" is displayed, it means that the user has requested a recording of the entire series program (if none is already recorded) or a recording of any part of the series program which is not recorded into the memory 64. Also, when a user inputs a series reservation set command regarding a series program whose episodes partially exist in the memory 64 using the displayed recording material state information, the controller 80 guides recording such that the recording is performed for only the remaining not-recorded episodes, so as not to overlap with the already stored episodes of the series recording materials. As a result, the present invention prevents duplicate recording of same materials in the storage 60.

Though the recording existence indicating information (e.g., 210, 220, 230) representing whether a recording material exists in the memory 64, and the reservation recording set state information (e.g., 240) are separately displayed on the broadcasting schedule information according to an embodiment, the reservation recording set state information can be included in the recording existence indicating information and displayed.

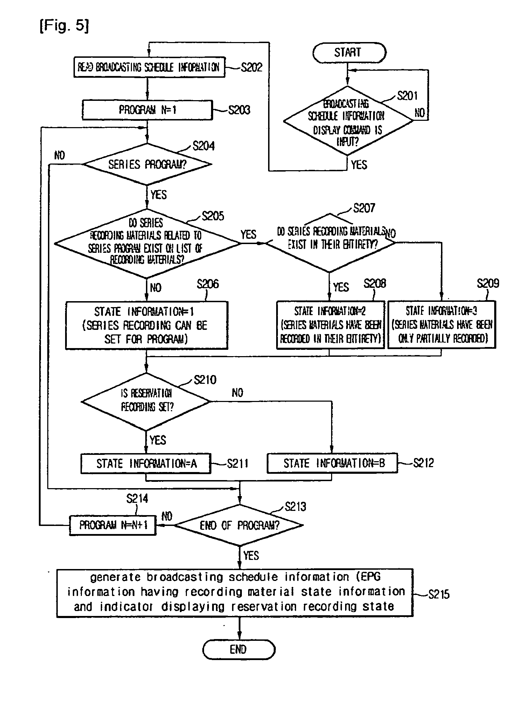

Fig. 5 shows a flowchart for explaining a method for controlling an image display apparatus according to the second embodiment.

Referring to Fig. 5, whether a broadcasting schedule information display command is input through the user interface 70 is judged (S201).

Subsequently, when the broadcasting schedule information display command is input as a result of the judgment (S201), already stored guide information (e.g., EPG) is read from the memory 62 (S202).

Then it is determined (e.g., by the controller 80) whether or not a first program identified in the program guide information is a series program (S203-S204).

Subsequently, when it is determined (e.g., by the controller 80) that the current program is a series program as the result of the judgment (S204), it is determined whether there exist, in the recording list stored in the memory 66, any series recording materials related to the current series program (S205). As discussed above, the recording material related to the program preferably means the program itself, but can mean other materials associated with the program.

If there do not exist the related series recording materials as a result of the judgment (S205), recording existence indicating information of the program is set to, e.g., 1 (S206). This represents that the series reservation recording of the series program can be set by the user if desired since this program is not stored in the memory 64 at all.

If there exist the related series recording materials as a result of the judgment (S205), it is determined all of the series recording materials (e.g., all episodes or series of the program) exists in the memory 64 (S207).

Subsequently, if there exist all of the series recording materials as a result of the judgment (S207), recording existence indicating information of the program is set to, e.g., 2 (S208). This represents that there exist the series recording materials of the series program corresponding to all episodes.

If there exist only part of the series recording materials as a result of the judgment (S207), recording existence indicating information of the program is set to, e.g., 3 (S209). This represents that the series program has been recorded for only some of the episodes.

Also, whether a reservation recording has been set for the series program is judged (S210).

Subsequently, if the reservation recording has been set for the series program as a result of the judgment (S210), reservation recording set state information of the series program is set to, e.g., A (S211). When the reservation recording has not been set for the series program as a result of the judgment (S210), reservation recording set state information of the series program is set to, e.g., B (S212).

Then whether the program is a last program identified in the broadcasting schedule program is judged (S213).

Subsequently, when the currently considered program is not the last program as a result of the judgment (S213), a next program identified in the broadcasting schedule program is judged (S214). That is, when the current program is an n-th program, step S204 is performed on an (n+1)-th program to check a recording material exist state and reservation recording set state with respect to the program. This process is repeated for each program identified in the broadcasting schedule program.

If the current program is the last program identified in the broadcasting schedule information as a result of the judgment (S213), modified broadcasting schedule information having at least one indicator indicating the recording existence indicating information and the reservation recording set state information is generated for display (S215).

As described above, an image display apparatus and a method for controlling the same according to the second embodiment display recording existence indicating information and reservation recording state information on the broadcasting schedule information, thereby allowing a user to easily set and manage series recording and view already stored series recording materials easily.

Embodiment III

Description of an image display apparatus according to still another embodiment is made for parts different from those of the previous embodiments, and the description of the same parts is omitted or may be briefly discussed.

That is, the operation of the image display apparatus according to the third embodiment will be described below.

First, when a broadcasting schedule information display command is input from the user interface 70, the controller 80 reads broadcasting schedule information stored in the broadcasting schedule information memory 62, and the broadcasting schedule information generator 90 generates broadcasting schedule information in response to a control signal of the controller 80.

When a series reservation command is received on the broadcasting schedule information, the controller 80 searches for a recording material list stored in the recording material list information memory 66 to judge whether series recording materials related to a series program for which a user desires to set the series reservation recording are already stored in the memory 64.

Subsequently, if the controller 80 determines that the series recording materials related to the series program do not exist in the memory 64 as a result of the searching of the recording material list, the controller 80 controls setting of the series reservation recording of the series program according to the user's request.

On the other hand, if the controller 80 determines that the series recording materials related to the series program exist (are stored) in the memory 64 as a result of the searching of the recording material list, the controller 80 checks whether the series recording materials exist in the memory 64 in their entirety, or partially.

If the series recording materials exist in their entirety in the memory 64, a message informing that the serial materials exist in their entirety in the recording material storing memory 64 is displayed to the user, and a recording list regarding the stored series recording materials is displayed to allow the user to immediately select and view the already stored series recording materials without setting a reservation recording of the series program.

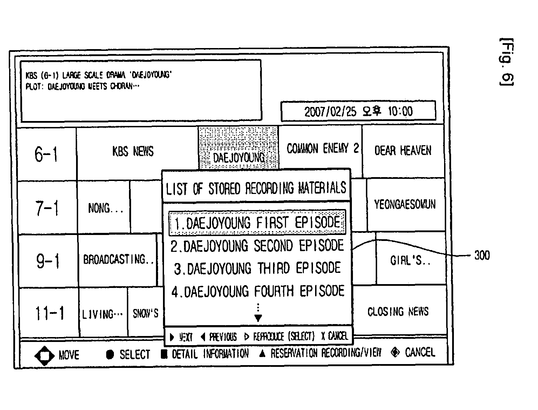

As an example, referring to Fig. 6, when the user sets a series reservation recording on a program entitled "Dae Joyoung", the controller 80 searches for any series recording materials stored in the storage 60 that are related to the series program entitled "Dae Joyoung". As discussed above, the related series recording materials preferably means one or more episodes/series of the series program. When the related series recoding materials are searched and determined to be stored already in the memory 64 in their entirety (all episodes), the controller 80 provides a recording material list 300 regarding the stored series recording materials related to the program entitled "Dae Joyoung" to allow the user to immediately select and reproduce the stored recording materials without setting a reservation recording of the desired program.

Also, when the series recording materials exist partially in the memory 64 (e.g., only certain episodes of a series program are stored in the memory 64), the controller 80 guides the user by providing appropriate menu(s) such that a series reservation recording can set selectively for only those non-stored series materials, excluding the already stored series recording materials of the program.

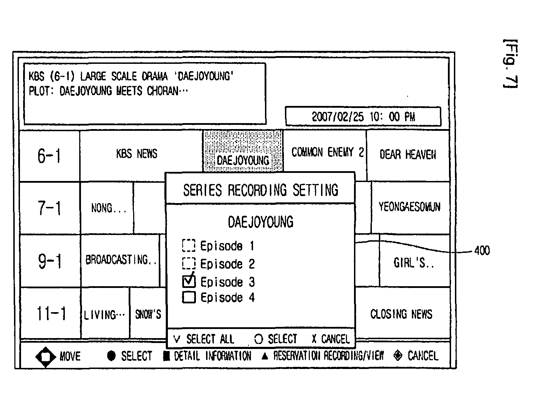

As an example, referring to Fig. 7, when the user sets a series reservation recording for the program entitled "Dae Joyoung", the controller 80 searches for related series recording materials stored in the memory 64 with respect to the series program entitled "Dae Joyoung". If the controller 80 determines that the series recording materials exist partially in the memory 64, the controller 80 displays a setting guidance menu 400 for guiding the user to set a series reservation recording for only the remaining episodes that are not stored in the memory, excluding the already stored series recording materials of the series program.

In other words, the setting guidance menu 400 allows the user to set the series reservation recording only for the remaining non-stored episodes of the series program, excluding the already stored episodes of the series program, Here, it is preferable that the episodes that are already stored in the memory 64 are shown as inactivated (not selectable by the user) and the episodes that are not stored in the memory 64 are shown as activated (selectable by the user) in the list of the setting guidance menu 400. For example, as shown in Fig. 4, Episodes 1 and 2 of "Dae Joyoung" are already stored in the memory 64 and are shown as grayed-out (not selectable), where the remaining episodes, Episodes 3 and 4 of "Dae Joyoung" are shown with boxes that are individually selectable by the user. If these boxes are selected by the user, then the image display apparatus records these episodes in the memory 64 when these episodes are broadcast during their broadcast times. As a result, the user may not doubly record the series recording materials already stored in the storage 60 and can effectively set the series reservation recording for only the remaining episodes corresponding to the series recording materials, excluding the already stored recording materials using the list.

In an example, if the controller 80 determines that all the episodes of a requested series program are already recorded in the memory 64, then the broadcasting schedule information as shown in Fig. 6 may be shown to the user, whereas if at least one of the episodes of the requested series program is not recorded in the memory 64, then the broadcasting schedule information as shown in Fig. 7 may be shown to the user.

Further, the various embodiments of the invention may be combined. For example, some of the features of the second and third embodiments may be combined such that in Fig. 4, when the user sees that the program "Joomong" has at least one episode that is not stored in the memory 64 by the indication 250, then the user can select this program which in turn causes a menu such as the menu 400 to appear. Then the user can manually select the remaining episode(s) to have them recorded in the memory 64 when they are broadcast during their broadcast times.

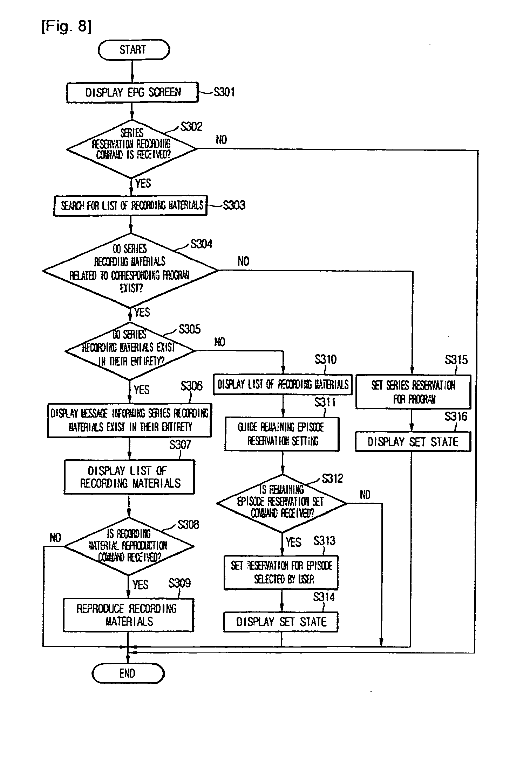

Fig. 8 illustrates a flowchart for explaining a method for controlling an image display apparatus according to the third embodiment.

Referring to Fig. 8, broadcasting schedule information (e.g., EPG) is displayed on a screen (e.g., display 50) according to a user's request (S301).

Subsequently, whether a series reservation recording command is input is judged on the broadcasting schedule information (S302).

If it is determined that the series reservation recording command is input as a result of the judgment (S302), series recording materials related to a program for which the user desires to set the series reservation recording are searched for on a list of stored recording materials, e.g., from the list stored in the memory 66 (S303). Subsequently, whether there exist, in the memory 64, the series recording materials related to the program for which the user desires to set the series reservation recording is judged (S304).

If it is determined that there exist the series recording materials in the memory 64 as a result of the judgment (S304), the controller 80 determines whether the series recording materials (series program) exist in their entirety or partially (S305).

If it is determined that the series recording materials exist in their entirety in the memory 64 as a result of the judgment (S305), a message informing that the series recording materials related to the desired program for which the user desires to set the series reservation recording are already stored in the memory 64 in their entirety is displayed to the user (S308-S309). Further, the list of the stored recording materials as shown in Fig. 6 may be displayed to the user.

If it is determined that the series recording materials exist partially in the memory 64 as a result of the judgment (S305), a list of the related series recording materials is displayed, e.g., as shown in Fig. 7 (S310).

Also, the controller 80 guides the user such that a reservation recording is set for only the remaining non-stored episodes excluding the already stored series recording materials, e.g., as shown in Fig. 7 (S311).

Subsequently, when a remaining episode reservation set command is received from the user, the series reservation recording is set for only the episodes selected by the user (S312-S313).

Also, a corresponding reservation recording set state is displayed on the broadcasting schedule information of the program for which the series reservation recording has been set (S314). For example, "REC" may be shown next to that program in the displayed EPG.

On the other hand, if it is determined that the series recording materials related to the corresponding program do not exist in the memory 64 at all as a result of the judgment (S304), the series reservation recording of the entire program is set (S315).

Also, a corresponding reservation recording set state is displayed on broadcasting schedule information of the program for which the series recording has been set (S316). In this case, "REC" may be shown next to the program in the displayed EPG.

As described above, an image display apparatus and a method for controlling the same according to this embodiment judge whether there exist series recording materials related to a program for which a user desires so as to set series reservation recording. The invention also guides the user so that the series recording materials are immediately reproduced without going through the process of setting reservation recording of the program, when the series recording materials exist in then entirety in the memory 64. and guides the user so that the series reservation recording is set for only the remaining non-stored episodes excluding the already stored series recording materials, thereby allowing the user to easily and efficiently set the series reservation recording.

The present invention can be used in any device in which broadcasting content can be recorded and reproduced.

Although embodiments have been described with reference to a number of illustrative embodiments thereof, it should be understood that numerous other modifications and embodiments can be devised by those skilled in the art that will fall within the scope of the appended claims.

### Industrial Applicability

The present invention has industrial applicability in that display appratus as like digital TV.

## Claims

1. An image display apparatus comprising:
a signal receiver (10, 20, 30, 40) configured to receive broadcasting signals including broadcasting schedule information, and to process the received broadcasting signals;
a storage (60) configured to store the broadcasting schedule information and at least one recording material related to a broadcasting program and processed by the signal receiver, the recording material related to a broadcasting program being the program itself or at least one episode in case of a series program; and
a controller (80) configured to display broadcasting schedule information when a broadcasting schedule information display command is received from a user,
wherein the displayed broadcasting schedule information includes an indicator (210, 220, 230) indicating a series program when the broadcasting program includes a plurality of episodes, wherein the indicator has first, second and third indicator states, wherein the indicator is displayed in the first indicator state (210) when no episode of the series program is stored in the storage, in the second indicator state (220) if some of the episodes of the series program only are stored in the storage (60) and in the third indicator state (230) if all episodes of the series program are stored in the storage (60).

2. The image display apparatus according to claim 1, wherein the controller (80) is configured to determine whether at least part of a particular broadcasting program identified in the broadcasting schedule information is stored in the storage (60) when a broadcasting schedule information display command is received from the user, and to output a control signal based on this determination result, so as to display the broadcasting schedule information including information regarding the particular broadcasting program and said indicator (210, 220, 230) indicating a series program when the broadcasting program includes a plurality of episodes.

3. The image display apparatus according to claim 2, further comprising:
a broadcasting schedule information generator (90) configured to generate the broadcasting schedule information including the indicator (210, 220, 230) in response to the control signal.

4. The image display apparatus according to claim 1, wherein the storage (60) comprises:
a broadcasting schedule information memory (62) configured to store the broadcasting schedule information received through the signal receiver;
a recording material storing memory (64) configured to store broadcasting programs or episodes received through the signal receiver; and
a recording material list information memory (66) configured to store a list of recording materials already stored in the recording material storing memory.

5. The image display apparatus according to claim 4, wherein the controller (80) is configured to judge whether a recording material corresponding to at least one program title identified in the broadcasting schedule information stored in the broadcasting schedule information memory (62) exists in the recording material list information memory (66), and to display the broadcasting schedule information including the indicator (210, 220, 230).

6. The image display apparatus according to claim 1, wherein the broadcasting schedule information displayed to the user includes a list of stored episodes of the particular broadcasting program as stored in the storage (60), or a list of remaining episodes of the particular broadcasting program which are not stored in the storage (60).

7. The image display apparatus according to claim 1, wherein the broadcasting schedule information displayed to the user includes an indicator (240) for indicating that the user has requested a reservation-recording of at least one non-stored episode of the particular broadcasting program.

8. A method for displaying broadcasting schedule information, the method comprising:
receiving broadcasting schedule information;
judging (S204) if a particular broadcasting program is a series program including a plurality of episodes, and
displaying broadcasting schedule information including an indicator (210, 220, 230) indicating that the broadcasting program is a series program, based on the judging result,
wherein the indicator has first, second and third indicator states, wherein the indicator is displayed in the first indicator state (210) when no episode of the series program is stored in the storage, in the second indicator state (220) if some of the episodes of the series program only are stored in the storage (60) and in the third indicator state (230) if all episodes of the series program are stored in the storage (60).

9. The method according to claim 8, further comprising:
checking whether there exist in a storage (60) recording materials related to the series program identified in the broadcasting schedule information, the recording material being at least one episode of the series program.

## Patentansprüche

1. Bildanzeigevorrichtung, die aufweist:
einen Signalempfänger (10, 20, 30, 40), der konfiguriert ist, um Rundfunksignale, die Rundfunkzeitplanungsinformationen enthalten, zu empfangen und die empfangenen Rundfunksignale zu verarbeiten;
einen Speicher (60), der konfiguriert ist, um die Rundfunkzeitplaninformationen und wenigstens ein Aufzeichnungsmaterial in Bezug auf ein Rundfunkprogramm, das von dem Signalempfänger verarbeitet wurde, zu speichern, wobei das Aufzeichnungsmaterial sich auf ein Rundfunkprogramm bezieht, welches das Programm selbst oder wenigstens eine Folge im Fall eines Serienprogramms ist; und
eine Steuerung (80), die konfiguriert ist, um Rundfunkzeitplaninformationen anzuzeigen, wenn ein Rundfunkzeitplanungsinformationsanzeigebefehl von einem Benutzer empfangen wird,
wobei die Rundfunkzeitplaninformationen einen Indikator (210, 220, 230) umfassen, der ein Serienprogramm angibt, wenn das Rundfunkprogramm mehrere Folgen umfasst, wobei der Indikator einen ersten, zweiten und dritten Indikatorzustand hat, wobei der Indikator in dem ersten Indikatorzustand (210) angezeigt wird, wenn keine Folge des Serienprogramms in dem Speicher gespeichert ist, in dem zweiten Indikatorzustand (220), wenn nur einige der Folgen des Serienprogramms in dem Speicher gespeichert sind, und in dem dritten Indikatorzustand (230), wenn alle Folgen des Serienprogramms in dem Speicher (60) gespeichert sind.

2. Bildanzeigevorrichtung nach Anspruch 1, wobei die Steuerung (80) konfiguriert ist, um zu bestimmen, ob wenigstens ein Teil eines bestimmten Rundfunkprogramms, das in den Rundfunkzeitplaninformationen identifiziert wird, in dem Speicher (60) gespeichert ist, wenn von dem Benutzer ein Rundfunkzeitplaninformationsbefehl empfangen wird, und basierend auf diesem Bestimmungsergebnis ein Steuersignal auszugeben, um die Rundfunkzeitplaninformationen einschließlich der Informationen in Bezug auf das bestimmte Rundfunkprogramm und den Indikator (210, 220, 230), der ein Serienprogramm angibt, anzuzeigen, wenn das Rundfunkprogramm mehrere Folgen umfasst.

3. Bildanzeigevorrichtung nach Anspruch 2, die ferner aufweist:
einen Rundfunkzeitplaninformationsgenerator (90), der konfiguriert ist, um die Rundfunkzeitplaninformationen einschließlich des Indikators (210, 220, 230) ansprechend auf das Steuersignal zu erzeugen.

4. Bildanzeigevorrichtung nach Anspruch 1, wobei der Speicher (60) aufweist:
einen Rundfunkzeitplaninformationsspeicher (62), der konfiguriert ist, um die durch den Signalempfänger empfangenen Rundfunkzeitplaninformationen zu speichern;
einen Aufzeichnungsmaterialspeicher (62), der konfiguriert ist, um durch den Signalempfänger empfangene Rundfunkprogramme oder Folgen zu speichern; und
einen Aufzeichnungsmateriallisteninformationsspeicher (66), der konfiguriert ist, um eine Liste von Aufzeichnungsmaterialien zu speichern, die bereits in dem Aufzeichnungsmaterialspeicher gespeichert sind.

5. Bildanzeigevorrichtung nach Anspruch 4, wobei die Steuerung (80) konfiguriert ist, um zu beurteilen, ob ein Aufzeichnungsmaterial, das wenigstens einem Programmtitel entspricht, der in den in dem Rundfunkzeitplaninformationsspeicher (62) gespeicherten Rundfunkzeitplaninformationen identifiziert wird, in dem Aufzeichnungsmateriallisteninformationsspeicher (66) vorhanden ist, und um die Rundfunkzeitplaninformationen einschließlich des Indikators (210, 220, 230) anzuzeigen.

6. Bildanzeigevorrichtung nach Anspruch 1, wobei die dem Benutzer angezeigten Rundfunkzeitplaninformationen eine Liste gespeicherter Folgen des bestimmten Rundfunkprogramms, wie in dem Speicher (60) gespeichert, oder eine Liste restlicher Folgen des bestimmten Rundfunkprogramms, die nicht in dem Speicher (60) gespeichert sind, umfassen.

7. Bildanzeigevorrichtung nach Anspruch 1, wobei die dem Benutzer angezeigten Rundfunkzeitplaninformationen einen Indikator (240) umfassen, um anzuzeigen, dass der Benutzer eine Aufzeichnungsreservierung von wenigstens einer nicht gespeicherten Folge des bestimmten Rundfunkprogramms angefordert hat.

8. Verfahren zum Anzeigen von Rundfunkzeitplaninformationen, wobei das Verfahren aufweist:
Empfangen von Rundfunkzeitplaninformationen;
Beurteilen (S204), ob ein bestimmtes Rundfunkprogramm ein Serienprogramm ist, das mehrere Folgen umfasst, und
Anzeigen von Rundfunkzeitplaninformationen, die einen Indikator (210, 220, 230) umfassen, der basierend auf dem Beurteilungsergebnis anzeigt, dass das Rundfunkprogramm ein Serienprogramm ist,
wobei der Indikator einen ersten, zweiten und dritten Indikatorzustand hat, wobei der Indikator in dem ersten Indikatorzustand (210) angezeigt wird, wenn keine Folge des Serienprogramms in dem Speicher gespeichert ist, in dem zweiten Indikatorzustand (220), wenn nur einige der Folgen des Serienprogramms in dem Speicher gespeichert sind, und in dem dritten Indikatorzustand (230), wenn alle Folgen des Serienprogramms in dem Speicher (60) gespeichert sind.

9. Verfahren nach Anspruch 8, das ferner aufweist:
Prüfen, ob es in einem Speicher (60) Aufzeichnungsmaterialien in Bezug auf das in den Rundfunkzeitplaninformationen identifizierte Serienprogramm gibt, wobei das Aufzeichnungsmaterial wenigstens eine Folge des Serienprogramms ist.

## Revendications

1. Appareil d'affichage d'images comprenant :
un récepteur de signaux (10, 20, 30, 40) configuré pour recevoir des signaux de diffusion comprenant des informations d'horaires de diffusion, et pour traiter les signaux de diffusion reçus ;
une unité de stockage (60) configurée pour stocker des informations d'horaires de diffusion et au moins un élément d'enregistrement lié à un programme de diffusion et traité par le récepteur de signaux, l'élément d'enregistrement lié à un programme de diffusion étant le programme lui-même ou au moins un épisode dans le cas d'un programme en série ; et
un contrôleur (80) configuré pour afficher des informations d'horaires de diffusion lorsqu'une commande d'affichage d'informations d'horaires de diffusion est reçue d'un utilisateur,
dans lequel les informations d'horaires de diffusion affichées comprennent un indicateur (210, 220, 230) indiquant un programme en série lorsque le programme de diffusion comprend une pluralité d'épisodes, dans lequel l'indicateur comporte des premier, deuxième et troisième états d'indicateur, dans lequel l'indicateur est affiché dans le premier état d'indicateur (210) lorsqu'aucun épisode du programme en série n'est stocké dans l'unité de stockage, dans le deuxième état d'indicateur (220) si certains seulement des épisodes du programme en série sont stockés dans l'unité de stockage (60) et dans le troisième état d'indicateur (230) si tous les épisodes du programme en série sont stockés dans l'unité de stockage (60).

2. Appareil d'affichage d'images selon la revendication 1, dans lequel le contrôleur (80) est configuré pour déterminer si au moins une partie d'un programme de diffusion particulier identifié dans les informations d'horaires de diffusion est stockée dans l'unité de stockage (60) lorsqu'une commande d'affichage d'informations d'horaires de diffusion est reçue de l'utilisateur, et pour délivrer un signal de commande sur la base du résultat de cette détermination, de façon à afficher les informations d'horaires de diffusion comprenant des informations concernant le programme de diffusion particulier et ledit indicateur (210, 220, 230) indiquant un programme en série lorsque le programme de diffusion comprend une pluralité d'épisodes.

3. Appareil d'affichage d'images selon la revendication 2, comprenant en outre :
un générateur d'informations d'horaires de diffusion (90) configuré pour générer les informations d'horaires de diffusion comprenant l'indicateur (210, 220, 230) en réponse au signal de commande.

4. Appareil d'affichage d'images selon la revendication 1, dans lequel l'unité de stockage (60) comprend :
une mémoire d'informations d'horaires de diffusion (62) configurée pour stocker les informations d'horaires de diffusion reçues par l'intermédiaire du récepteur de signaux ;
une mémoire de stockage d'éléments d'enregistrement (64) configurée pour stocker des programmes ou épisodes de diffusion reçus par l'intermédiaire du récepteur de signaux ; et
une mémoire d'informations de liste d'éléments d'enregistrement (66) configurée pour stocker une liste d'éléments d'enregistrement déjà stockés dans la mémoire de stockage d'éléments d'enregistrement.

5. Appareil d'affichage d'images selon la revendication 4, dans lequel le contrôleur (80) est configuré pour juger si un élément d'enregistrement correspondant à au moins un titre de programme identifié dans les informations d'horaires de diffusion stockées dans la mémoire d'informations d'horaires de diffusion (62) existe dans la mémoire d'informations de liste d'éléments d'enregistrement (66), et pour afficher les informations d'horaires de diffusion comprenant l'indicateur (210, 220, 230).

6. Appareil d'affichage d'images selon la revendication 1, dans lequel les informations d'horaires de diffusion affichées à l'utilisateur comprennent une liste d'épisodes stockés du programme de diffusion particulier tel que stockés dans le dispositif de stockage (60), ou une liste d'épisodes restants du programme de diffusion particulier qui ne sont pas stockés dans le dispositif de stockage (60).

7. Appareil d'affichage d'images selon la revendication 1, dans lequel les informations d'horaires de diffusion affichées à l'utilisateur comprennent un indicateur (240) pour indiquer que l'utilisateur a demandé un enregistrement de réservation d'au moins un épisode non stocké du programme de diffusion particulier.

8. Procédé d'affichage d'informations d'horaires de diffusion, le procédé comprenant :
recevoir des informations d'horaires de diffusion ;
juger (S204) si un programme de diffusion particulier est un programme en série comprenant une pluralité d'épisodes, et
afficher des informations d'horaires de diffusion comprenant un indicateur (210, 220, 230) indiquant que le programme de diffusion est un programme en série, sur la base du résultat du jugement,
dans lequel l'indicateur comporte des premier, deuxième et troisième états d'indicateur, dans lequel l'indicateur est affiché dans le premier état d'indicateur (210) lorsqu'aucun épisode du programme en série n'est stocké dans l'unité de stockage, dans le deuxième état indicateur (220) si certains seulement des épisodes du programme en série sont stockés dans l'unité de stockage (60) et dans le troisième état d'indicateur (230) si tous les épisodes du programme en série sont stockés dans l'unité de stockage (60).

9. Procédé selon la revendication 8, comprenant en outre :
vérifier s'il existe dans l'unité de stockage (60) des éléments d'enregistrement liés au programme en série identifié dans les informations d'horaires de diffusion, l'élément d'enregistrement étant au moins un épisode du programme en série.
